# EUROPEAN PATENT APPLICATION

(11) **EP 4 620 583 A1**
(43) Date of publication of application: **24.09.2025**
(21) Application number: 23810423.6
(22) Date of filing: 10.11.2023
(51) Int. Cl.: B07B 13/11, B07B 13/00

(54) **DEVICE FOR SORTING METALLIC FIBERS**

(30) Priority: 16.11.2022 EP 22383107
(71) Applicant: Flexofibers Europa, S.L., 28660 Boadilla del Monte, Madrid (ES)
(72) Inventor: GRASES GALOFRÉ, Manuel, 28660 Boadilla del Monte, Madrid (ES); GRASES MENDOZA, Alejandro, 28660 Boadilla del Monte, Madrid (ES)
(74) Representative: ABG Intellectual Property Law, S.L.
(86) International application number: PCT/ES2023/070671
(87) International publication number: WO 2024/105292

(57) **Abstract**

The present invention is comprised in the sector of the industry for sorting and recycling materials, particularly metallic fibers originating from shredded used tires. More particularly, the present invention relates to a device for sorting metallic fibers according to their length, as well as to a method for sorting metallic fiber by length. The end product obtained from this method is a metallic fiber with controlled characteristics which originates from recycled tires and can be reused, for example, as a concrete reinforcement and for manufacturing brake pads or other products.

## Description

### OBJECT OF THE INVENTION

The present invention is comprised in the sector of the industry for sorting and recycling materials, particularly metallic fibers originating from shredded used tires. More particularly, the present invention relates to a device for sorting metallic fibers according to their length, as well as to a method for sorting metallic fiber by length. The end product obtained from this method is a metallic fiber with controlled characteristics which originates from recycled tires and can be reused, for example, as a concrete reinforcement and for manufacturing brake pads or other products.

### BACKGROUND OF THE INVENTION

Tires are made up, among other materials, of metallic fibers, and specifically steel fibers which form an inner reinforcement mesh of said tires. Once tires are no longer in use because they have become worn, there is a need to give a second life to the steel contained in said tires. To that end, processes which seek to recycle steel fibers from used tires in order to give them a second life by reusing them for different products and uses are known.

Concrete for construction can be reinforced by means of steel rods or steel fibers. Steel fibers have been produced at the industrial level since the 1950s, but the use of second-life steel fibers originating from the recovery of tires that are no longer in use is not widespread since the technology which can be used regularly for this purpose is not available.

It has been observed that steel fibers originating from used tires are highly flexible and have a very high strength, so use thereof in the concrete mixture allows reinforcing and increasing strength, reducing the labor of placing mesh- or bar-type reinforcements in civil engineering projects.

These steel fibers are produced from smelting and drawing with the high economic and energy cost that it entails. Both the intentional manufacture of fibers by smelting and the attainment thereof from used tires, also by smelting processes, generate a significant carbon footprint which is harmful to the environment given their pollution index.

In order to reduce or prevent the intentional manufacture of steel fibers for concrete reinforcement, and to thereby reduce pollution, the present invention seeks to give a second life to the steel fibers contained in used tires by means of recycling these fibers to obtain an end product by means of a low-emission, circular economy process including recycling steps.

The recycling of steel fibers is aimed at recovering high-quality waste materials so as to convert them into second-life commercial products based on waste from tire recycling plants. This waste is made up, among other elements, of the filaments of a steel mesh with a high physicochemical quality, which is furthermore contaminated with rubber and nylon fibers.

Different concrete applications require different fiber lengths; therefore the present invention proposes a specific device for sorting fibers by length in order to give a second life to the steel fibers comprised in used tires depending on the application for which the concrete will be used.

The fundamental parameters of the fiber are its length, diameter, slenderness, and minimum tensile strength. These parameters dictate confidence in the use of the product when they are well controlled. The present invention takes into account these parameters to obtain a recycled product with a higher strength and flexibility based on sorting the fibers for each concrete application or type.

Furthermore, reducing energy consumption is fundamental for concrete companies given that the cement and construction industries play a huge role worldwide in the generation of carbon gases (CO₂), which are considered environmental pollutants.

Through the second use of the steel fiber, the impact of greenhouse gas emission is reduced considerably with an estimated 97% carbon trace reduction in comparison with industrially produced steel fibers.

Furthermore, a surplus of very short fibers which are not useful as a concrete reinforcement are generated in the steel fiber recovery process, for example by means of cutting up used tires. The described method also allows separating these short fibers which can be reused in other applications, for example, as an additive in the paste giving shape to brake pads. It can also be reused in filters made up of fibers for applications in vehicles and in self-cleaning filters for filtering polluted air in big cities, among others.

The metallic fiber obtained, for example, from shredded used tires can be separated from other non-metallic components, however, the method and device which is capable of automatically sorting the fiber and allows establishing specific values in ranges relative to fiber dimensions, such as length, are unknown. The device according to the invention allows resolving this problem by providing means that at least allow sorting into at least two types of fiber according to a dimensional physical parameter, for example, fiber length.

### DESCRIPTION OF THE INVENTION

The main object of the present invention is to provide a continuous and industrialized process for sorting fibers made up of filaments of the same density that, however, have at least different lengths. This sorting is achieved by ranges of previously defined average lengths such that the average lengths of the filaments of each group of fibers which exit already sorted can be controlled. As a result of this sorting, various new resulting products (metallic fibers) for various applications which furthermore comply with the regulations required for marketing as second-life products are obtained.

In a first inventive aspect, the present invention provides a device adapted for sorting metallic fibers according to claim 1, and in a second inventive aspect, the present invention provides a method for sorting metallic fiber according to claim 14. The dependent claims show preferred examples of the present invention.

The first inventive aspect relates to a device adapted for sorting metallic fibers by length, preferably metallic fibers originating from recycled tires, characterized in that the device comprises:
- a first channel comprising a first end and a second end;
- first vibration means adapted for exerting a vibrating force on the first channel;
- a feeder for the metallic fiber adapted for feeding the first channel with the metallic fiber at a point in the first channel proximal to the first end;
- a first outlet for a first type of metallic fiber;
- a second outlet for a second type of metallic fiber;
wherein
- the first channel extends, in the operating mode, according to a longitudinal axis Y-Y' which is inclined with respect to a horizontal reference direction X-X';
- the configuration of the first channel, according to a cross-section perpendicular to the longitudinal axis Y-Y', shows with respect to a vertical central plane containing the longitudinal axis Y-Y' a first oblique segment located on one side of the vertical central plane and a second oblique segment located on the other side of the vertical central plane; and wherein the first segment and the second segment are arranged opposite one another and wherein the separation between the segments is larger in the upper part than in the lower part of the first channel;
- the first vibration means are configured to exert a vibrating force on the first channel so that the metallic fiber travels along the first channel in a forward direction from the first end to the second end of the first channel, the vibrating force being exerted in a direction of vibration with at least one upward component of the vibrating forces and such that the projection of the vibrating force on the longitudinal direction Y-Y' of the first channel is not zero; and
- the first outlet and the second outlet are arranged at different points in the first channel along the longitudinal axis Y-Y'.

For the purpose of the present invention, metallic fiber, in singular, shall be understood as a set, or a plurality, of fibers or filaments, of different diameters, different lengths and comprising metallic material essentially of the same density, which are randomly deformed in curved shapes with a single curvature or several curvatures in the same plane or in different planes. That is, the term in the singular refers to a mixture comprising a plurality of filaments that can be statistically characterized, and the term in the plural refers to the filaments.

According to this definition, a metallic fiber from which a certain amount of selected filaments have been removed, thus changing the statistical properties, is a new different metallic fiber. In addition, throughout this description reference is made to metallic fiber or fiber but in either case it refers to metallic fiber.

For the purpose of the present invention, the term "sort" or the action "sorting" when referring to the action of the device or the method on the metallic fiber will be interpreted as separating some filaments from the mix of filaments of the metallic fiber generating at least two different metallic fibers, the metallic fiber resulting from the removal of the selected filaments and, the metallic fibers formed by the selected filaments removed from the original metallic fiber. Specifically, the metallic fibers are sorted by length through the present device and method.

Within the process of recycling metallic fibers from used tires, there is a step which is based on sorting fibers into at least two types, and particularly on sorting fibers by their length, which shall be understood hereinafter as short fibers and long fibers. Long fibers are of special interest to be reused as concrete reinforcements, whereas short fibers are of interest to be used as components in the paste forming brake pads, in filters for applications in vehicles, and in self-cleaning filters for filtering polluted air in cities.

In order to sort fibers by length into two types, the present invention proposes a device formed by at least one main channel in which there is provided or supplied, at a point thereof, metallic fiber. This fiber which is supplied by a feeder to the channel is a set of metallic fibers that will run along the first channel the movement of which will be brought about by the vibration that is exerted on this first channel. It shall be understood that the device is in the operating mode when the fiber supplied to the first channel moves along the first channel (is in motion) as a result of the vibration applied on this first channel.

The first channel comprises a first end and a second end, the second end opposite to the first end. Further, the first channel is configured with two outlets, a first outlet intended for a first type of fiber to leave the channel and a second outlet intended for a second type of fiber to leave the channel. In particular, fibers with a shorter length exit through the first outlet and fibers with a longer length exit through the second outlet, with the fibers which have been supplied in the first channel thereby being sorted into two types of fiber, i.e., into two groups of fibers with a different range of lengths.

In turn, the first channel extends, in the operating mode (when the fiber moves along same), according to the longitudinal direction Y-Y' which will be inclined with respect to a horizontal reference direction X-X'. In other words, the first channel has an inclined configuration (according to the longitudinal direction Y-Y') with respect to a horizontal reference X-X'. Throughout this document, horizontal reference X-X' shall be understood as that longitudinal direction which is orthogonal to the direction of gravity.

Throughout the description, relative terms such as upper, lower, above, and below should be interpreted according to the operating position of the sorting device, and specifically of the first channel, with respect to the horizontal reference X-X'.

The feeder feeds the first channel with metallic fiber at a point in the first channel, this point being proximal to the first end of the first channel.

This channel, according to a cross-section perpendicular to the longitudinal axis Y-Y', has with respect to a vertical central plane containing said longitudinal axis Y-Y' two oblique segments, one on each side of the vertical central plane. These oblique segments of the channel are facing one another with respect to said vertical central plane and separated from one another such that the separation is larger in the upper part than in the lower part of the channel. More particularly, the oblique segments of the channel form two opposing surfaces. This configuration of oblique segments with a larger separation in the upper part than in the lower part of the channel benefits moving fibers grouping together according to their length configuration in the operating mode of the device. In other words, the two opposing surfaces forming said oblique segments of the channel provide a space between them through which the fiber supplied to the first channel will move. In the operating mode of the device, fibers corresponding to the first type of fiber (fibers with a longer length) remain entwined in the upper part of the first channel, whereas fibers corresponding to the second type of fiber (fibers with a shorter length) group together in the lower part of the first channel. Fibers with a longer length tend to remain in the upper part of the channel given that they are entwined together, forming a bridge of fibers between both oblique segments of the channel as a result of their longer length, whereas fibers with a shorter length move down towards the lower part of the channel where the separation between the oblique segments decreases.

These first and second outlets of the present device are each located at different points in the first channel along the longitudinal axis Y-Y'.

The device further comprises vibration means in charge of exerting a homogenous vibrating force along the entire first channel. Particularly, vibration is applied according to a direction of vibration in which one of the components of the vibrating forces is an upward component in relation to the horizontal reference X-X' and the projection of the vibrating force on the longitudinal direction Y-Y' of the first channel is not 0. The application of the vibrating force according to the direction of vibration described ensures the forward movement of the fibers along the channel, that is, from a first point where the fiber is supplied, proximal to the first end of the first channel, to a second point or end of the channel. That is, as a result of the vibrating force exerted to the first channel, the metallic fiber supplied by the feeder travels along the first channel in a forward direction. This forward direction being understood as the direction of movement of the metallic fiber from the first end of the first channel to the second end of thereof, and being imposed by the vibration means.

The configuration of the first channel in combination with the application of the vibrating force as specified provide a device capable of sorting fibers into two types according to their length. A first type of fiber exiting through a first outlet of the channel and a second type of fiber exiting through a second outlet of the channel are thereby obtained, with the fiber thus being sorted into two types, one with a longer length and another with a shorter length.

Therefore, the present device ensures the proper sorting of fibers by length for subsequent reuse, which provides a good end product after recycling the metallic fibers originating from used tires and the emission of polluting gases is reduced as a result of reusing said fibers.

In a particular embodiment, the first outlet of the first channel is one or more openings in the lower part of the channel according to a cross-section perpendicular to the longitudinal axis Y-Y', wherein this opening/these openings are longitudinal or transverse opening/openings according to the longitudinal direction Y-Y' of the first channel.

Furthermore, this opening or these openings have a size such that they allow the passage of fibers of a first type so that they leave the first channel during the sorting process. Although several openings are provided as the first outlet, all of them are intended for one and the same first type of fiber.

The first outlet advantageously allows the first type of fiber to leave the first channel, thereby being separated from the rest of the fiber (fibers of a second type) that continues to move along the first channel as a result of the vibrating force exerted on this first channel.

In an embodiment, the first outlet is arranged in a lower part of the first channel, preferably proximal to the second end of the first channel, or in the first end of the first channel, or both; and the second outlet is arranged in the second end of the first channel.

In a particular embodiment:
- the longitudinal axis Y-Y' of the first channel is upwardly inclined from a first end to a second end of the first channel in the operating mode, wherein the point of the first channel adapted for receiving the fiber from the feeder is located in a lower position with respect to the point of the first channel adapted for the first outlet and the second outlet; and
- the first outlet for a first type of fiber is arranged, according to a cross-section perpendicular to the longitudinal axis Y-Y', in the lower part of the first channel and,
- the first outlet for a first type of fiber is located, according to the direction of the longitudinal axis Y-Y', between the first end and the second end of the first channel and the second outlet for the second type of fiber corresponds with the second end of the first channel.

According to this configuration, the first channel comprises a first end and a second end such that in the operating mode of the device the first channel is upwardly inclined, with the ends of this first channel being at a different height with respect to the horizontal reference X-X'. The point of the first channel where fiber is received from the feeder is therefore located in a lower position with respect to the first fiber outlet and the second fiber outlet in the first channel.

The first outlet for a first type of fiber is located in the lower part of the first channel where the separation between the oblique segments is smaller or even zero. Furthermore, the fact that the second outlet corresponds with the second end of the first channel shall be understood to mean that the second outlet coincides with the second end of the first channel, i.e., the second end itself would be the second outlet for the second type of fiber.

Therefore, following the upward direction of the first channel, starting at the first end of the channel and ending at the second end of the channel, the first outlet for a first type of fiber is arranged first followed by the second outlet for a second type of fiber.

The combination of the inclined first channel with the arrangement of the fiber outlets advantageously allows a first type of fiber, and specifically the type which accumulates in the lower area of the first channel, to exit first, whereas the second type of fiber, being entwined in the upper part of the channel forming a bridge, would leave the first channel thereafter.

In a particular embodiment, the feeder for the fiber comprises:
- a second channel;
- second vibration means adapted for exerting a vibrating force on the second channel;
- a prior fiber feeding source adapted for feeding the second channel with the fiber;
- a third fiber outlet of the second channel;
wherein
- the second channel extends, in the operating mode, according to a longitudinal axis Z-Z' which is inclined with respect to the horizontal reference direction X-X';
- the configuration of the second channel, according to a cross-section perpendicular to its longitudinal axis Z-Z', shows with respect to a vertical central plane containing its longitudinal axis Z-Z' a first oblique segment located on one side of the vertical central plane and a second oblique segment located on the other side of the vertical central plane; and wherein the first segment and the second segment are arranged opposite one another and wherein the separation between the segments is larger in the upper part than in the lower part of the second channel; and
- the second vibration means are configured to exert a vibrating force on the second channel in a direction of vibration such that the projection of the vibrating force on the longitudinal direction Z-Z' of the second channel is not zero;
and wherein
- the third fiber outlet of the second channel of the feeder is located above the first channel configured so that the point at which the fiber falls is located between the ends of the first channel;
- the longitudinal axis Z-Z' of the second channel is inclined according to a downward inclination and the longitudinal axis Y-Y' of the first channel is inclined according to an upward inclination.

The second channel of the feeder for the fiber shall be understood to be the first channel described above in structural terms. In this case, the second channel extends, in the operating mode, according to a longitudinal axis Z-Z' which is also inclined with respect to the horizontal reference X-X'. Furthermore, the second channel also comprises two oblique segments arranged like the segment of the first channel. In turn, for this particular configuration of the feeder for the fiber, there are second vibration means which exert a second vibrating force on the second channel to cause the fibers to move along this second channel. The second vibrating force is exerted on the second channel in an upward direction of vibration with respect to the horizontal reference X-X', wherein the projection of this second vibrating force on the longitudinal direction Z-Z' of the second channel is not 0.

Furthermore, the second channel comprises a third outlet which is arranged above the first channel such that the fiber exiting through this third outlet of the second channel falls onto the first channel at a point comprised between the first end and the second end of the first channel.

Furthermore, as a result of this configuration with a second channel, in the operating mode of the device, the second channel is arranged with a downward inclination with respect to the horizontal reference X-X', whereas the first channel is arranged after the second channel and with an upward inclination with respect to the horizontal reference X-X'.

For this configuration, at least part of the fiber exiting through the third outlet of the second channel and falling onto the first channel starts to move upwardly as a result of the vibrating force that is exerted on the first channel. In this way, given the upward inclination of the first channel with respect to the second channel, part of the fiber falling onto the first channel is not capable of moving upward along this first channel, specifically the first type of fiber (fiber with a shorter length) such that it exhibits a downward movement along the first channel, exiting the first channel through the first end thereof.

Advantageously, this specific configuration of the feeder for the fiber in turn provides a first sorting cycle such that the fiber which is supplied to the first channel has already been previously sorted through the second channel of the feeder. This increases the precision of sorted fiber resulting from the first channel.

In a particular embodiment, the length of the first channel is comprised between 0.1 and 1.5 meters, and the angle of inclination of the first channel with respect to the horizontal reference direction X-X' is comprised between 5 and 25 degrees. These ranges of values for the length and the angle of the first channel advantageously lead to the sorting being as precise as possible, thereby ensuring that the fiber with a longer length is grouped together in the upper part of the channel, being entwined and forming a bridge until it leaves the channel through the second end thereof, whereas the second type of fiber is grouped together in the lower part of the channel and the fiber that successfully moves upward along this channel ends up leaving the channel through a first outlet before the first type of fiber leaves through the second outlet.

In a particular embodiment, the device comprises a plurality of first channels wherein:
- the configuration of the first channels, according to a cross-section perpendicular to the longitudinal axis Y-Y', shows with respect to the vertical central plane a first oblique segment located on one side of the vertical central plane and a second oblique segment located on the other side of the vertical central plane; and wherein the first segment and the second segment are arranged opposite one another and wherein the separation between the segments is larger in the upper part than in the lower part of the first channel;
- the first channels extend, in the operating mode, according to a longitudinal direction Y-Y' which is upwardly inclined with respect to the horizontal reference direction X-X' from the first end of each first channel to the second end thereof, respectively;
- with the first channels being arranged in series such that at least the second end of a channel is arranged above the subsequent first channel.

All the first channels have the configuration described above for the first channel of the device, with the exception that in this case several first channels are provided. In the operating mode of the device, the first channels are all arranged according to an upward longitudinal direction Y-Y' from the first end of each channel to the second end thereof. In a particular embodiment, the inclination of each first channel is the same. In another particular embodiment, the inclination of the first channels varies with respect to one another, although it is always an upward inclination with respect to the horizontal reference X-X' in all cases.

In this configuration with a plurality of first channels, these channels are positioned in series, i.e., one after another successively, such that at least the second end of a channel is arranged above the subsequent first channel.

The plurality of first channels advantageously allows obtaining a result whereby the fibers are sorted with more precision given that the sorting cycle is repeated as many times as the number of first channels provided, with sorting cycle being understood to mean the movement of the fiber along a first channel.

In a particular embodiment, the configuration of the first channel, according to a cross-section perpendicular to the longitudinal axis Y-Y' and with respect to a vertical central plane, further shows a third segment connecting the first segment with the second segment, wherein this third segment corresponds with the lower part of the channel according to said cross-section.

This third segment of the first channel is understood to mean the base of the channel through which the first type of fiber (fiber with a shorter length) moves. The presence of a closed channel in the lower part thereof by a third segment ensures that the first type of fiber leaves the channel through the first outlet and not prematurely, in order to thereby be able to center the collection thereof in a specific region, for example, below the first outlet.

In a more particular embodiment, the angle of inclination of the first oblique segment and the second oblique segment of the first channel with respect to the vertical central plane is comprised between 20 and 60 degrees. This range of values for the angle formed by the oblique segments of the first channel advantageously ensure that the fibers are grouped into two types along the first channel in the operating mode when the fiber moves in this first channel, thereby facilitating the entwining of the fibers of a second type in the upper part of the first channel and the accumulation of the fibers of a first type in the lower part of the channel.

In another particular embodiment, the first channel, according to a cross-section perpendicular to the longitudinal axis Y-Y', has a trapezoidal configuration, or a triangular configuration, or a configuration formed by curved surfaces.

Any of these configurations of the first channel contributes to the movement of the fiber along the channel and the correct sorting thereof.

The preceding confutations relating to the first channel can also be extended to the second channel provided by the feeder for the fiber.

In a particular embodiment:
- the first oblique segment and the second oblique segment of the first channel are connected to one another in the lower part of the first channel, defining a closed channel in the lower part thereof; or
- the first channel comprises a separation between the first segment and the second segment in the lower part thereof, defining an open channel in the lower part thereof.

That is, the first channel may have a configuration in which the lower part thereof is open by means of a separation between the oblique segments in the lower part of the channel or in which the lower part thereof is closed. For the device with a plurality of first channels, a combination of these configurations of the first channels can be provided. Furthermore, these configurations of the first channel could also be extended to the second channel of the feeder.

In a more particular embodiment, the device further comprises actuation means configured to modify the inclination of the first channel with respect to the horizontal reference direction X-X'. This modification of the inclination of the first channel is performed depending on needs and on the type of fiber which is supplied by the feeder to the channel, as well as according to the type of sorting by fiber length that is to be performed.

In a more particular embodiment, the actuation means are further configured to move the first channels with respect to one another along the horizontal reference direction X-X'.

In a particular embodiment, the device comprises a plurality of first channels arranged parallel to one another. This configuration advantageously allows different fiber sorting processes to be performed simultaneously.

In a second inventive aspect, the present invention presents a method for sorting metallic fiber by length, preferably metallic fiber originating from recycled tires, between at least a first type of fiber and a second type of fiber, by means of a device according to the first inventive aspect, the method comprising the following steps:
a) supplying metallic fiber to the first channel by means of the feeder for the metallic fiber;
b) providing vibration to the first channel through vibration means;
c) sorting the metallic fiber by length into a first type of metallic fiber exiting through a first outlet of the channel and a second type of metallic fiber exiting through a second outlet of the channel.

As a result of the configuration of the device described above, the present method allows the metallic fiber supplied to the first channel to be precisely sorted by length into at least two types of metallic fiber.

In step a), metallic fiber made up of a mixture of metallic fibers of a first type and metallic fibers of a second type is supplied to the first channel. In step b), the vibration means exert an upward vibrating force on the first channel so that the supplied fiber moves along the first channel. Lastly, in step c) the metallic fiber which is moving along the first channel is sorted by length such that a first type of metallic fiber first exits the channel by means of a first outlet and then a second type of metallic fiber exits through a second outlet. Both the first outlet and the second outlet can each be formed by a plurality of openings or outlets.

In a particular embodiment, the first type of metallic fiber has a shorter length than the second type of metallic fiber. However, the present invention is not limited to sorting the metallic fiber into two lengths, but rather can sort the fiber into two or more lengths.

In a more particular embodiment, the method further comprises the following steps before step a):
i. supplying metallic fibers including rubber and nylon fibers as raw material;
ii. separating the rubber and nylon fibers from the metallic fibers and removing the rubber and nylon fibers; and
iii. supplying the clean metallic fiber from the preceding step as the fiber which is supplied to the first channel according to step a).

The present invention provides a method for sorting metallic fiber by length so that a specific type of fiber can be provided to be reused as desired. In order to be able to sort the metallic fiber according to the present method, steps which condition the fiber that will be fed to the first channel have been previously performed from the starting raw material. That is, metallic fibers with rubber and nylon fibers are first provided as raw material. Before supplying the metallic fiber to the first channel, the raw material is cleaned such that the rubber and nylon fibers are removed, leaving only the metallic fiber, which is known as clean fiber. Once the metallic fiber has been cleaned and all the rubber and nylon fiber residues removed, the metallic fiber would be supplied to the first channel in order to carry out the sorting thereof, for example, by length.

In a more particular embodiment, step ii) of rubber separation is carried out through a magnetic separator, and nylon fiber separation is carried out through an air separator.

In a third inventive aspect, the present invention provides a product comprising, and more specifically consisting of, metallic fiber sorted according to the method of the second inventive aspect, characterized in that the metallic fiber comprises filaments wherein the length of filaments of the metallic fiber is according to a log-normal statistical distribution.

The metallic fiber obtained by means of the method of the second inventive aspect is understood to mean a sorted metallic fiber where a selection of short fibers has been removed from the original fiber, giving rise to a second type of fiber (or long fiber), this fiber corresponding to a log-normal statistical distribution in relation to the length thereof. This distribution has been identified in the sorted fiber regardless of the distribution of the fiber fed to the sorting process, although it has been observed that it is particularly valid for a raw material consisting of fibers to be sorted which follows either a uniform distribution or a normal (Gaussian) distribution. The fiber having a log-normal distribution is therefore a strong indication of it being obtained by means of sorting according to the method according to the second inventive aspect or by means of a machine according to the first inventive aspect.

The metallic fiber according to this third inventive aspect is particularly useful for reinforcing concrete and mortars given that it has been observed that fibers following this log-normal distribution are those which actually provide strength, eliminating short fibers that provide no contribution whatsoever in increasing strength.

In a particular embodiment, the sorted metallic fiber comprises a standard deviation with respect to the mean length corresponding to a ratio *σ*/*µ* (standard deviation/mean) of less than 0.5, more preferably less than 0.45, more preferably less than 0.4, more preferably less than 0.3, more preferably less than 0.2.

Additionally, the present method for sorting by length allows obtaining as a result a sorted metallic fiber with a standard deviation comprised between 3 mm and 13 mm and a mean length comprised between 5 mm and 40 mm, more preferably between 7 mm and 35 mm and more preferably between 10 mm and 25 mm, and more preferably between 15 mm and 20 mm.

In a fourth inventive aspect, the present invention provides the use of the metallic fiber according to the third inventive aspect for reinforcing concretes or mortars or both concretes and mortars.

### DESCRIPTION OF THE DRAWINGS

These and other features and advantages of the invention will be more clearly understood based on the following detailed description of a preferred embodiment given solely by way of non-limiting illustrative example in reference to the attached figures.
- Figure 1: This figure shows a schematic side view of the sorting device according to a first embodiment of the present invention.
- Figure 2: This figure shows two schematic cross-section views of the first channel of the sorting device according to an embodiment of the present invention.
- Figures 3a-3d: These figure show different configurations of the first channel for the sorting device according to embodiments of the present invention.
- Figure 4: This figure shows a schematic side view of the first channel of the sorting device according to an embodiment of the present invention.
- Figure 5: This figure shows a schematic top view of the first channel of Figure 4 according to a particular embodiment of the present invention
- Figure 6: This figure shows a schematic top view of the first channel according to a particular embodiment of the present invention.
- Figure 7: This figure shows a schematic side view of the sorting device according to a second embodiment of the present invention.
- Figure 8: This figure shows a schematic side view of the sorting device according to a third embodiment of the present invention.

### DETAILED DESCRIPTION OF THE INVENTION

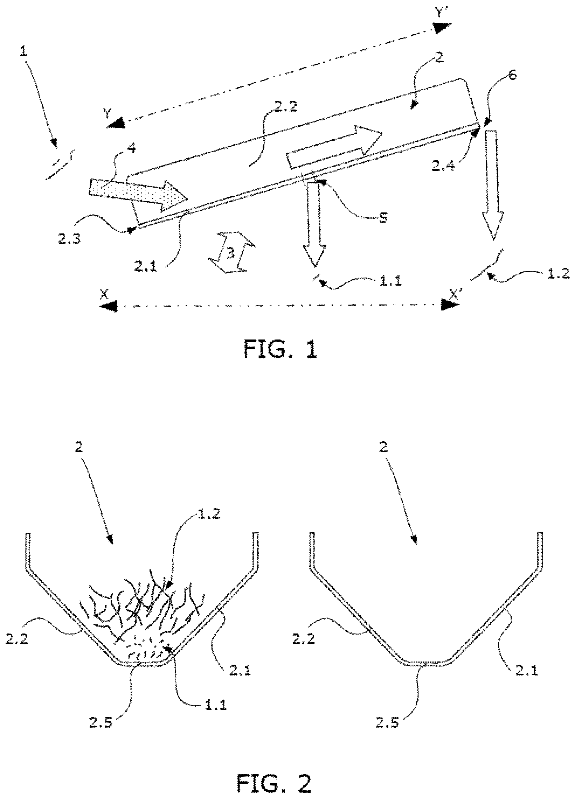

The present invention defines a device for sorting metallic fibers (1) by length. A first example of this device is illustrated in Figure 1 with a schematic side view thereof. In particular, the device shown in Figure 1 is a device for sorting metallic fibers (1) by length between a first type of fiber (1.1) and a second type of fiber (1.2). According to this first example, the device shown in Figure 1 is in the operating mode, that is, in its configuration envisaged for sorting the fibers (1). In addition, the metallic fibers (1) to be sorted by the present device are preferably originated from recycled tires.

The device is formed by a first channel (2) which extends, in the operating mode as shown in Figure 1, according to a longitudinal axis Y-Y' which is inclined with respect to a horizontal reference direction X-X'. The first channel (2) extends upwardly from a first end (2.3) to a second end (2.4) such that the first end (2.3) is located in a lower position than the position of the second end (2.4) of the first channel (2) with respect to the horizontal reference X-X'.

The device in turn comprises a first outlet (5) for the first type of fiber (short fiber) and a second outlet (6) for the second type of fiber (long fiber). In this first example, the first outlet (5) is arranged in the lower part of the first channel (2) according to a cross-section perpendicular to the longitudinal axis Y-Y' between the first end (2.3) and the second end (2.4) of the first channel (2). In terms of the second outlet (6), it coincides with the second end (2.4) of the first channel (2).

The device also has a feeder (4) for the fiber (1) in charge of supplying the fiber (1) to be sorted to the first channel (2). In this first example, the feeder (4) is arranged above the first channel (2) in the lowermost area thereof, that is, closest to the first end (2.3) of the first channel (2).

Furthermore, the device comprises first vibration means (3) exerting a vibrating force on the first channel (2) to cause the movement of the fiber (1), which is supplied by the feeder (4) for the fiber (1), along the first channel (2). Particularly, the first vibration means exert a vibrating force in a direction of vibration with at least one upward component of the vibrating forces and such that the projection of this vibrating force on the longitudinal direction Y-Y' of the first channel (2) is not 0.

The arrows shown on the device of Figure 1 represent the movement of the fibers (1) along the first channel (2) in the operating mode, with this being an upward movement, as well as the direction in which each type of fiber (1.1, 1.2) exits or falls through the corresponding outlets (5, 6). In particular, this Figure 1 shows how the short fiber (1.1) leaves the first channel (2) through the first outlet (5) before the long fiber (1.2) leaves the channel through the second outlet (6).

In a preferred example, the length of the first channel (2) is comprised between 0.1 and 1.5 meters. Furthermore, in another preferred example, the angle of inclination of the first channel (2) with respect to the horizontal reference X-X' is comprised between 5 and 25 degrees.

Figure 2 shows two cross-section views of an embodiment of the first channel (2) in which a first view shows the fibers inside the first channel (2) and the other view does not. These views correspond to a cross-section perpendicular to the longitudinal axis Y-Y'. In particular, this Figure 2 shows how the first channel (2), with respect to a vertical central plane containing the longitudinal axis Y-Y', is formed by two oblique segments, a first segment (2.1) arranged on one side of the vertical central plane and a second segment (2.2) arranged on the other side of this vertical central plane. That is, the first segment (2.1) and the second segment (2.2) of the first channel (2) are arranged opposite one another. Furthermore, the first channel (2) has a separation between these segments (2.1, 2.2) such that the separation is larger in the upper part than in the lower part of the first channel (2). According to the embodiment shown in Figure 2, the first channel (2) also comprises a third segment (2.5) in the lower part of the first channel (2) connecting the first oblique segment (2.1) and the second oblique segment (2.2). The third segment (2.5) would therefore coincide with the so-called lower part of the first channel (2) according to this section view.

The first view shown in Figure 2 shows how, in the operating mode, the long fibers (1.2) are located in the upper part of the first channel (2) entwined together and forming a bridge between the oblique segments (2.1, 2.2). It also shows how the short fibers are located in the lower part of the first channel (2) on the third segment (2.5), below the long fibers. The arrangement of the fibers as shown in this first view of Figure 2 is due to the application of the vibrating force on the first channel (4) through the first vibration means (3).

Moreover, the second view of the Figure 2 shows how the oblique segments (2.1, 2.2) form a first angle of inclination with respect to the vertical central plane. In a preferred example, the first angle of inclination is comprised between 20 and 60 degrees.

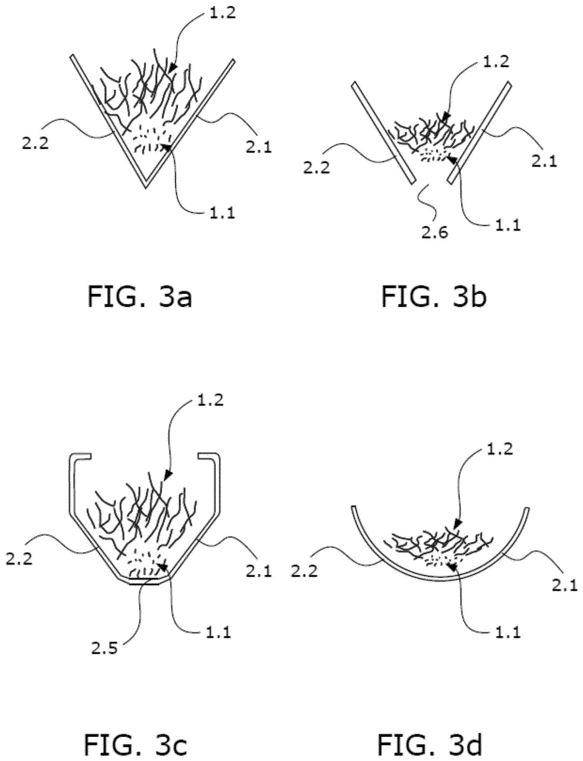

The first channel (2) of the present device, according to a cross-section perpendicular to the longitudinal axis Y-Y', can have a trapezoidal configuration, a triangular configuration, or a configuration formed by curved surfaces. For example, Figure 2 shows how the first channel (2) has a trapezoidal configuration. Moreover, Figures 3a-3d show the different possible configurations mentioned for this first channel (2). Figure 3a shows a triangular configuration for the first channel (2) in which the oblique segments (2.1, 2.2) are connected to one another in the lower part of the first channel (2), with a closed channel thereby being defined in the lower part thereof. Figure 3b shows a trapezoidal or triangular configuration for the first channel (2) in which there is a separation between the oblique segments (2.1, 2.2) in the lower part of the first channel (2), thereby defining an open channel in the lower part thereof. Figure 3c shows a trapezoidal configuration similar to that of Figure 2, defining a closed channel in the lower part thereof. Lastly, Figure 3d shows a configuration with curved surfaces for the first channel (2), such that the oblique segments (2.1, 2.2) are connected to one another in the lower part of the first channel (2), thereby defining a closed channel in the lower part thereof.

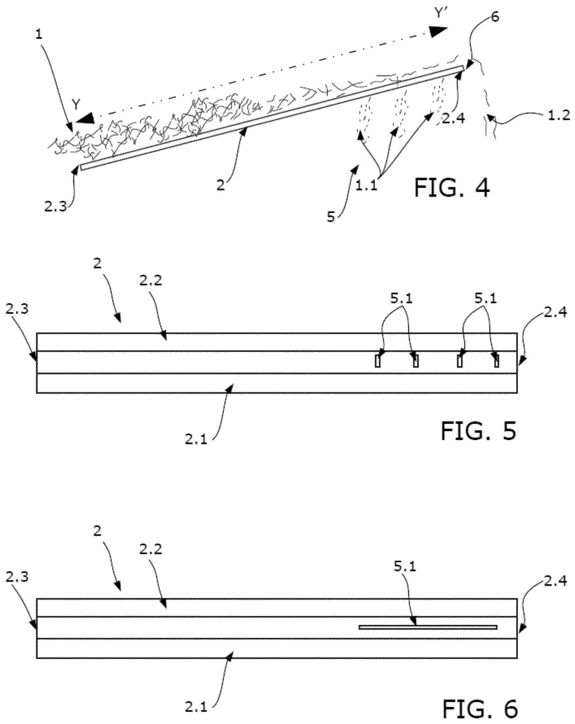

Figure 4 shows a side view of the first channel (2) according to an embodiment in the operating mode with the fiber (1) moving along this first channel (2). The geometrical configuration of this first channel (2) coincides with the configuration explained for the first example (Figure 1). However, in this case (Figure 4), the first channel (2) comprises a first outlet (5) which is formed by three openings (5.1) in the lower part of the first channel (2). Figure 5 shows a preferred embodiment in which there are in total four openings (5.1) of the first outlet (5) arranged transversely in the third segment (5.2) of the first channel (2), that is, in the lower part thereof. Moreover, Figure 6 shows an alternative embodiment in which the first outlet (5) is formed by a single opening (5.1) arranged longitudinally along a portion of the third segment (2.5) of the first channel (2), in the lower part thereof. The openings (5.1) shown in both embodiments of Figures 5 and 6 are provided for the short fiber to leave the first channel (2).

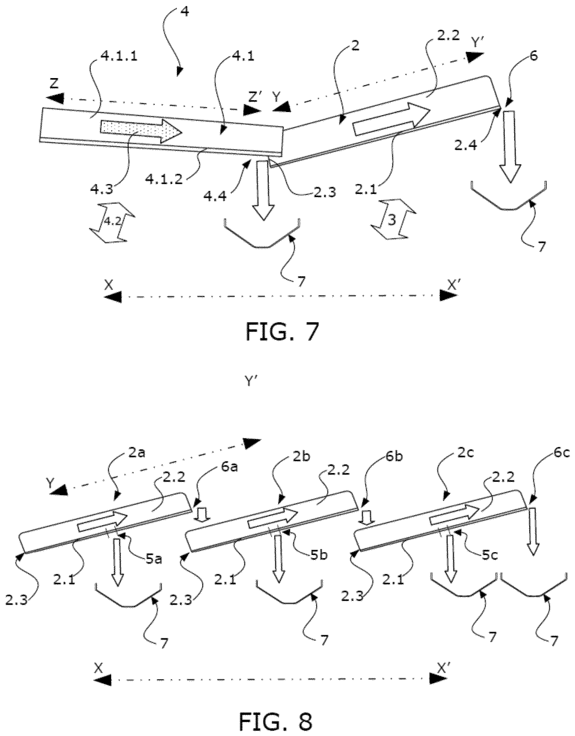

Figure 7 shows a second example of a device for sorting fiber (1) into short fibers (1.1) and long fibers (2.1). This device comprises a first channel (2) like the one which has been described above for the first example in Figure 1, with the exception that the feeder (4) for the fiber is characterized as described below and that the first fiber outlet is also different from the first example.

According to Figure 7, the feeder (4) is formed by a second channel (4.1) which, in the operating mode as shown in Figure 7, extends according to a longitudinal axis Z-Z' which is inclined with respect to a horizontal reference direction X-X'. In this case, the longitudinal axis Z-Z' is inclined in a downward direction contrary to the longitudinal axis Y-Y' of the first channel (2) which is inclined in an upward direction. This second channel (4.1) comprises a first oblique segment (4.1.1) and a second segment (4.1.2), both the first segment (4.1.1) and the second segment (4.1.2) are arranged opposite one another and such that the separation between the segments (4.1.1, 4.1.2) is larger in the upper part than in the lower part of the second channel (4.1).

The feeder (4) in turn comprises a prior fiber feeding source (4.3) supplying fiber (1) to the second channel (4.1) and a third outlet (4.4) for fiber (both short and long fibers). In this second example, the prior fiber feeding source (4.3) is arranged above the second channel (4.1) at about half of the second channel (4.1). Furthermore, the third outlet (4.4) is arranged at one end of the second channel (4.1), with the end of the second channel (4.1) being understood as the third outlet (4.4).

Furthermore, the feeder (4) comprises second vibration means (4.2) exerting a vibrating force on the second channel (4.1) to cause the movement of the fiber (1), which is supplied by the prior fiber feeding source (4.3), along the second channel (4.1). Particularly, the second vibration means (4.2) exert a vibrating force in a direction of vibration such that the projection of this vibrating force on the longitudinal direction Z-Z' of the second channel (4.1) is not 0.

In this second example, the third fiber outlet (4.4) is arranged above the first channel (2) such that the point at which the fiber falls from the second channel (4.1) is located between the ends of the first channel (2). Furthermore, in relation to the first channel (2), the first outlet (5) for the fiber (1) corresponds with the first end (2.3) of the first channel (2) such that the fiber (1) which is supplied from the second channel (4.1) to the first channel (2) starts to move upward along the first channel (2) as a result of the vibrating force exerted by the first vibration means (3). In this upward movement of the fiber (1) along the first channel (2), the long fiber (1.2) entwined together in the upper part of the first channel (2) forming a bridge between the oblique segments (2.1, 2.2), whereas the short fiber (1.1) is located in the lower part of the first channel (2). As the vibrating force is being exerted on the first channel (2), the short fiber (1.1) is unable to continue moving upward along the first channel (2) such that it ends up exiting the first channel (2) through the first outlet (5) which coincides with the first end (2.3) of the first channel (2) as a result of the effects of the vibration. In other words, the first channel (2) presents such an upward inclination with respect to the horizontal reference X-X' that it does not allow the short fiber (1.1) to be able to continue moving upward along the first channel (2) and causes said fiber to move in a downward movement (contrary to the long fiber) to the first end (2.3) of the first channel (2).

The arrows shown on the device of Figure 7 represent the movement of the fibers (1) along the second channel (4.1) and followed by the first channel (2) in the operating mode, with this being a first downward movement along the second channel (4.1) and then an upward movement along the first channel (2) for the long fiber (1.2) and a downward movement for the short fiber (1.1) until it exits the first channel (2) through its first end (2.3). Furthermore, the arrows show the direction in which the fiber from the second channel (4.1) exits to or falls onto the first channel (2), as well as the exit of the short fiber (1.1) through the first end (2.3) of the first channel (2) and the exit of the long fiber (1.2) through the second end (2.4) of the first channel (2).

Figure 8 shows a third example of a device for sorting fiber comprising a plurality of first channels (2a, 2b, 2c). These first channels (2a, 2b, 2c) have a structural configuration similar to that which has been described above for the first example of Figure 1. For this third example, all the first channels (2a, 2b, 2c) in the operating mode are inclined according to a longitudinal direction Y-Y' with respect to the reference direction X-X', with the longitudinal axis Y-Y' being common for all the first channels (2a, 2b, 2c). The first channels (2a, 2b, 2c) are arranged in series such that a first channel (2a) is arranged first, then a second channel (2b) is arranged, and lastly a third channel (2c) is arranged, such that the second end (2.4) of the first channel (2a) is arranged above the second channel (2b), and the second end of the second channel (2b) is arranged above the third channel (2c). Each of these first channels (2a, 2b, 2c) comprises a first outlet (5a, 5b, 5c) through which fiber with different length for each first outlet (5a, 5b, 5c) exits; and a second outlet (6a, 6b, 6c) through which fiber with different length for each second outlet (6a, 6b, 6c) exits. That is, the configuration with consecutive channels as shown in Figure 8 gives rise to the fiber being sorted into more than two lengths.

The arrows shown on the device of Figure 8 represent the movement of the fibers along the plurality of first channels (2a, 2b, 2c) in the operating mode. First, the fibers supplied by the feeder (4) (not shown in Figure 8) move upwardly along the first channel (2a) such that part of the fibers, those with a shorter length, exit through the first outlet (5a) and the other fibers with a longer length than those which have exited through the first outlet (5a) continue on, moving along the first channel (2a) until they fall onto the second channel (2b) through the second outlet (6a) of the first channel (2a). In the second channel (2b), the fibers with a longer length than those which have exited through the first outlet (5a) of the first channel (2a) move upwardly along this second channel (2b) such that part of the fibers, those with a shorter length, exit through the first outlet (5b) of the second channel (2b) and the other fibers with a longer length than those which have exited through the first outlet (5b) of the second channel (2b) continue on, moving along the second channel (2b) until they fall onto the third channel (2c) through the second outlet (6b) of the second channel (2b). Lastly, in the third channel (2c), the fibers (1) move upwardly along this third channel (2c) such that the fibers with a shorter length exit through the first outlet (5c) of the third channel (2c) and the remaining fibers continue on, moving along the third channel (2c) until they exit through the second outlet (6) of the third channel (2c).

Figures 7 and 8 further show containers (7), some intended for receiving the fiber exiting through the first outlets (5a, 5b, 5c) and others for receiving the fiber exiting through the second outlets (6a, 6b, 6c), such that the fiber is sorted into four types of different lengths.

In a particular example (not shown), the device comprises actuation means configured to modify the inclination of the first channel (2) and/or second channel (4) and/or of the plurality of first channels (2a, 2b, 2c) with respect to the horizontal reference direction X-X'. This actuation means are in turn configured to move the second channel (4) or the first channel (2) with respect to one another or the plurality of first channels (2a, 2b, 2c) with respect to one another along the horizontal reference direction X-X'.

In another particular example (not shown), the device comprises a plurality of first channels (2) arranged parallel to one another for sorting fiber of different lengths in each of these first channels (2).

Moreover, the invention further proposes a method for sorting the metallic fiber (1) by length between short fiber (1.1) and long fiber (1.2), and preferably for sorting metallic fiber (1) originating from recycled tires.

An example of this method is described below in relation to the sorting device shown in Figure 1. The method comprises the following steps:
a) supplying fiber (1) (including of all lengths) to the first channel (2) by means of the feeder (4) for the fiber (1);
b) exerting a vibrating force by means of the first vibration means (3) on the first channel (2); and
c) sorting the fiber (1) by length into short fiber (1.1) exiting through a first outlet (5) of the first channel (2) and long fiber (1.2) exiting through a second outlet (6) of the first channel (2).

In relation to the device shown in Figure 4, in step c), the short fiber (1.1) exits through the different openings (5.1) of the first outlet (5).

In relation to the device shown in Figure 7, in step a), the fiber (1) is first supplied to a second channel (4.1) by means of a prior feed source (4.3), and from this second channel (4.1) the fiber (1) falls onto the first channel (2), i.e., is supplied to this first channel (2). In step b), a vibrating force is not only exerted on the first channel (2), rather a vibrating force is also exerted on the second channel (4.1) by means of second vibration means (4.2).

In relation to the device shown in Figure 8, the method repeats steps a) to c) for every first channel (2a, 2b, 2c) until the sorting of short fibers (1.1) and long fibers (1.2) is completed.

In another example, the method further comprises before step a) the following steps:
i. supplying metallic fibers including rubber and nylon fibers as raw material;
ii. separating the rubber and nylon fibers from the metallic fibers and removing the rubber and nylon fibers; and
iii. supplying the clean metallic fiber from the preceding step as the fiber (1) which is supplied to the first channel (2) according to step a).

In a more particular example, in step ii), rubber separation is carried out through a magnetic separator. Furthermore, in step ii), nylon fiber separation is carried out through an air separator. In any case, step ii) is understood to as a cleaning process for cleaning the metallic fiber the second use of which is the object of interest.

In another example, the method further comprises a step before step iii) in which a process of grading the clean fiber obtained in step ii) by diameter is carried out and followed by a second cleaning process.

In an example according to the invention, the long fiber (1.2) obtained by means of the sorting described above is a fiber (1.2) the length of which corresponds to a log-normal statistical distribution. In particular, this fiber (1.2) comprises a standard deviation of X-Y with respect to a pre-established mean length. More particularly, the mean length is comprised between 5mm and 40 mm, more preferably between 7 mm and 35 mm, and more preferably between 10 mm and 25 mm, and more preferably between 15 mm and 20 mm.

The mean length and standard deviation values, both expressed in millimeters (mm), are shown below, according to an example, for nine fiber products with a log-normal distribution.

| Product | Mean length (mm) | Standard deviation (mm) |
|---|---|---|
| 1 | 7 | 4 |
| 2 | 10 | 5 |
| 3 | 12 | 6 |
| 4 | 15 | 7 |
| 5 | 20 | 9 |
| 6 | 25 | 10 |
| 7 | 30 | 11 |
| 8 | 35 | 12 |
| 9 | 40 | 13 |

The purpose of sorting the fiber into long fiber (1.2) and short fiber (1.1) is so that this long fiber (1.2) can be used as concrete and mortar reinforcement.

## Claims

1. Device adapted for sorting metallic fibers (1) by length, preferably metallic fibers originating from recycled tires, **characterized in that** the device comprises:
- a first channel (2) comprising a first end (2.3) and a second end (2.4);
- first vibration means (3) adapted for exerting a vibrating force on the first channel (2);
- a feeder (4) for the metallic fiber (1) adapted for feeding the first channel (2) with the metallic fiber at a point in the first channel (2) proximal to the first end (2.3);
- a first outlet (5) for a first type of metallic fiber (1.1);
- a second outlet (6) for a second type of metallic fiber (1.2);
wherein
- the first channel (2) extends, in the operating mode, according to a longitudinal axis Y-Y' which is inclined with respect to a horizontal reference direction X-X';
- the configuration of the first channel (2), according to a cross-section perpendicular to the longitudinal axis Y-Y', shows with respect to a vertical central plane containing the longitudinal axis Y-Y' a first oblique segment (2.1) located on one side of the vertical central plane and a second oblique segment (2.2) located on the other side of the vertical central plane; and wherein the first segment (2.1) and the second segment (2.2) are arranged opposite one another and wherein the separation between the segments (2.1, 2.2) is larger in the upper part than in the lower part of the first channel (2);
- the first vibration means (3) are configured to exert a vibrating force on the first channel (2) so that the metallic fiber (1) travels along the first channel (2) in a forward direction from the first end (2.3) to the second end (2.4) of the first channel (2), the vibrating force being exerted in a direction of vibration with at least one upward component of the vibrating forces and such that the projection of the vibrating force on the longitudinal direction Y-Y' of the first channel (2) is not zero; and
- the first outlet (5) and the second outlet (6) are arranged at different points in the first channel (2) along the longitudinal axis Y-Y'.

2. Device according to the preceding claim, **characterized in that** the first outlet (5) is one or more openings (5.1) in the lower part of the first channel (2) according to a cross-section perpendicular to the longitudinal axis Y-Y', wherein this opening/these openings (5.1) are longitudinal or transverse opening/openings according to the longitudinal direction Y-Y' of the first channel (2).

3. Device according to any of the preceding claims, **characterized in that**:
- the longitudinal axis Y-Y' of the first channel (2) is upwardly inclined from the first end (2.3) to the second end (2.4) of the first channel (2) in the operating mode, wherein the point of the first channel (2) adapted for receiving the fiber (1) from the feeder (4) is located in a lower position with respect to the point of the first channel (2) adapted for the first outlet (5) and the second outlet (6); and
- the first outlet (5) for a first type of metallic fiber (1.1) is arranged, according to a cross-section perpendicular to the longitudinal axis Y-Y', in the lower part of the first channel (2), and
- the first outlet (5) for a first type of metallic fiber (1.1) is located, according to the direction of the longitudinal axis Y-Y', between the first end (2.3) and the second end (2.4) of the first channel (2), and the second outlet (6) for the second type of metallic fiber (1.2) corresponds with the second end (2.4) of the first channel (2).

4. Device according to claim 3, **characterized in that** the feeder (4) for the fiber comprises:
- a second channel (4.1);
- second vibration means (4.2) adapted for exerting a vibrating force on the second channel (4.1);
- a prior fiber feeding source (4.3) adapted for feeding the second channel (4.1) with the fiber;
- a third fiber outlet (4.4) of the second channel (4.1);
wherein
- the second channel (4.1) extends, in the operating mode, according to a longitudinal axis Z-Z' which is inclined with respect to the horizontal reference direction X-X';
- the configuration of the second channel (4.1), according to a cross-section perpendicular to its longitudinal axis Z-Z', shows with respect to a vertical central plane containing its longitudinal axis Z-Z' a first oblique segment (4.1.1) located on one side of the vertical central plane and a second oblique segment (4.1.2) located on the other side of the vertical central plane; and wherein the first segment (4.1.1) and the second segment (4.1.2) are arranged opposite one another and wherein the separation between the segments (4.1.1, 4.1.2) is larger in the upper part than in the lower part of the second channel (4.1); and
- the second vibration means (4.2) are configured to exert a vibrating force on the second channel (4.1) in a direction of vibration such that the projection of the vibrating force on the longitudinal direction Z-Z' of the second channel (4.1) is not zero;
and wherein
- the third fiber outlet (4.4) of the second channel (4.1) of the feeder (4) is located above the first channel (2) configured so that the point at which the fiber falls is located between the ends of the first channel (2);
- the longitudinal axis Z-Z' of the second channel (4.1) is inclined according to a downward inclination and the longitudinal axis Y-Y' of the first channel (2) is inclined according to an upward inclination.

5. Device according to any of the preceding claims, **characterized in that** the length of the first channel (2) is comprised between 0.1 and 1.5 meters, and the angle of inclination of the first channel (2) with respect to the horizontal reference direction X-X' is comprised between 5 and 25 degrees.

6. Device according to any of the preceding claims, **characterized in that** it comprises a plurality of first channels (2a, 2b, 2c) wherein:
- the configuration of the first channels (2a, 2b, 2c), according to a cross-section perpendicular to the longitudinal axis Y-Y', shows with respect to the vertical central plane a first oblique segment (2.1) located on one side of the vertical central plane and a second oblique segment (2.2) located on the other side of the vertical central plane; and wherein the first segment (2.1) and the second segment (2.2) are arranged opposite one another and wherein the separation between the segments (2.1, 2.2) is larger in the upper part than in the lower part of the first channel (2);
- the first channels (2a, 2b, 2c) extend, in the operating mode, according to a longitudinal direction Y-Y' which is upwardly inclined with respect to the horizontal reference direction X-X' from the first end (2.3) of each first channel (2a, 2b, 2c) to the second end (2.4) thereof, respectively;
- with the first channels (2a, 2b, 2c) being arranged in series such that at least the second end (2.4) of a channel (2a) is arranged above the subsequent first channel (2b).

7. Device according to any of the preceding claims, **characterized in that** the configuration of the first channel (2), according to a cross-section perpendicular to the longitudinal axis Y-Y' and with respect to a vertical central plane, further shows a third segment (2.5) connecting the first segment (2.1) with the second segment (2.2), wherein this third segment (2.5) corresponds with the lower part of the first channel (2) according to said cross-section.

8. Device according to the preceding claim, **characterized in that** the angle of inclination of the first oblique segment (2.1) and the second oblique segment (2.2) of the first channel (2) with respect to the vertical central plane is comprised between 20 and 60 degrees.

9. Device according to any of the preceding claims, **characterized in that** the first channel (2), according to a cross-section perpendicular to the longitudinal axis Y-Y', has a trapezoidal configuration, or a triangular configuration, or a configuration formed by curved surfaces.

10. Device according to any of the preceding claims, **characterized in that**:
- the first oblique segment (2.1) and the second oblique segment (2.2) of the first channel (2) are connected to one another in the lower part of the first channel (2), defining a closed channel in the lower part thereof; or
- the first channel (2) comprises a separation (2.6) between the first segment (2.1) and the second segment (2.2) in the lower part thereof, defining an open channel in the lower part thereof.

11. Device according to any of the preceding claims, **characterized in that** it further comprises actuation means configured to modify the inclination of the first channel (2) with respect to the horizontal reference direction X-X'.

12. Device according to claim 6 and any of the preceding claims, **characterized in that** the actuation means are further configured to move the first channels (2a, 2b, 2c) with respect to one another along the horizontal reference direction X-X'.

13. Device according to any of the preceding claims, **characterized in that** it comprises a plurality of first channels (2) arranged parallel to one another.

14. Method for sorting metallic fiber (1) by length, preferably metallic fiber originating from recycled tires, between at least a first type of metallic fiber (1.1) and a second type of metallic fiber (1.2), by means of the device according to any of the preceding claims, the method comprising the following steps:
a) supplying metallic fiber (1) to the first channel (2) by means of the feeder (4) for the metallic fiber (1);
b) providing vibration to the first channel (2) through vibration means; and
c) sorting the metallic fiber (1) by length into a first type of metallic fiber (1.1) exiting through a first outlet (5) of the first channel (2) and a second type of metallic fiber (1.2) exiting through a second outlet (6) of the first channel (2).

15. Method according to the preceding claim, **characterized in that** the first type of metallic fiber (1.1) has a shorter length than the second type of metallic fiber (1.2).

16. Product comprising metallic fiber sorted according to the method of any of claims 14 to 15, **characterized in that** the metallic fiber comprises filaments wherein the length of filaments of the metallic fiber is according to a log-normal statistical distribution.

17. Product according to the preceding claim, **characterized in that** it comprises a standard deviation with respect to a mean length corresponding to a ratio σ/µ of less than 0.5, more preferably less than 0.4, more preferably less than 0.3, more preferably less than 0.2.

18. Product according to the preceding claim, **characterized in that** the mean length is comprised between 5 mm and 40 mm, more preferably between 7 mm and 35 mm and more preferably between 10 mm and 25 mm, and more preferably between 15 mm and 20 mm.

19. Use of the metallic fiber according to any of claims 16 to 18, as well as of any of those obtained from the method according to claims 14 to 15 or by means of the device according to any of claims 1 to 13, for reinforcing concretes or mortars or both concretes and mortars.
